# EUROPEAN PATENT SPECIFICATION

(11) **EP 3 154 337 B1**
(45) Date of publication and mention of the grant of the patent: **04.09.2019**
(21) Application number: 15807287.6
(22) Date of filing: 22.04.2015
(51) Int. Cl.: A01K 27/00

(54) **RETRACTABLE LEASH AND METHOD WITH END-OF-LEASH WARNING**
EINZIEHBARE LEINE UND METHODE MIT LEINENENDENWARNUNG
LAISSE RÉTRACTABLE ET PROCEDE AVEC AVERTISSEMENT DE FIN DE LAISSE

(30) Priority: 12.06.2014 US 201414302762; 21.04.2015 US 201514692301
(43) Date of publication of application: 19.04.2017
(73) Proprietor: Crucs Holdings, LLC, Copley, OH 44321 (US)
(72) Inventor: CRUCS, Kevin, Copley, OH 44321 (US)
(74) Representative: Eisenführ Speiser
(86) International application number: PCT/US2015/027031
(87) International publication number: WO 2015/191167

(56) References cited:
- WO-A1-2013/178966
- WO-A1-2013/178966
- DE-U1- 20 313 319
- US-A- 6 003 474
- US-A1- 2010 050 955
- US-A1- 2010 050 955
- US-A1- 2010 107 992
- US-A1- 2010 107 992
- US-A1- 2011 041 778
- US-A1- 2011 120 387
- US-A1- 2011 181 423
- US-A1- 2013 327 280
- US-B2- 6 886 499

## Description

This international patent application claims priority to and the benefit of both U.S. Patent Application Serial Number 14/302,762 filed on June 12, 2014, and U.S. Patent Application Serial Number 14/692,301 filed on April 21, 2015.

### TECHNICAL FIELD

Embodiments of the present invention relate to leashes, tethers, cords, or ropes. More particularly, certain embodiments relate to a retractable dog leash providing an end-of-leash warning.

### BACKGROUND

When walking a dog on a retractable leash, often times the dog pulls on the leash such that the leash becomes fully detracted from its housing, jerking the arm of the person walking the dog and jerking and/or choking the neck of the dog (one end of the leash being attached to the housing held by the person and the other end being attached to a collar of the dog). In such situations, neither the person walking the dog nor the dog may be aware that the retractable leash is about to run out. Therefore, it may be desirable to provide a warning to the person walking the dog and/or to the dog that the leash is about to run out. Furthermore, other mechanisms (for uses other than for walking a dog) may have a leash, cord, tether, or rope that is retractable and is coiled up within a housing or on a frame or reel device of some kind. It may be desirable to provide a similar warning in such other mechanisms as well.

Further limitations and disadvantages of conventional, traditional, and proposed approaches will become apparent to one of skill in the art, through comparison of such approaches with the subject matter of the present application as set forth in the remainder of the present application with reference to the drawings.

DE 203 13 319 U1 discloses a leash device for a rope that can be rolled up and unrolled for guiding animals, consisting of a hand-portable handle housing in which the leash is arranged, a roller, which is mounted on an axle in the housing, a brake button, which is arranged in the housing and with which the roller and belt or rope can be stopped in a desired section length, a strap or rope, which is wound up and unwound on the roll and which is guided to the outside by a corresponding outlet opening, and a connecting hook, which is attached to the outer strap or rope end. In the housing a warning device is installed, which sends a warning signal to the dog or the handler, if the strap or rope is unrolled almost to the end.

US 2011/0181423 A1 discloses a dynamically controlled retractable tether provides a mechanism by which a pet can be safely exercised on a bicycle or other vehicle. The pet avoids injury when running in front of the bicycle and stopping short, by having a detector detect the relative motion of the pet and the bicycle so as to automatically apply brakes to the bicycle prior to the pet being injured. Variations include a zone detection mechanism that detects a relative position of the pet relative to the bicycle, and uses a different set of braking parameters, depending on the zone in which the pet is located.

US 2011/0041778 A1 discloses a retractable animal leash having a housing that surrounds a spring activated spooled leash. The housing may be opened in order to gain access to the spring-activated spooled leash and replace or repair the spooled leash as desired.

US 2010/0107992 A1 discloses retractable leashes that use a braking mechanism to stop a dog from movement. A mechanism is provided for smoothly or gradually braking the unreeling of die line, and can include a brake with a pad or pads for stopping the dog much like a bicycle. The brake and pads allow the user to squeeze the trigger lightly or more aggressively to slow and stop the dog's movement without the sudden jerk of traditional retractable leashes. The consumer may ultimately clamp down on the trigger to clamp die pads to the reel instantly for an aggressive stop if needed.

### SUMMARY

One embodiment of the present invention comprises a system. The system includes a rotatable retracting mechanism and a leash coiled around the rotatable retracting mechanism and configured to be uncoiled from and recoiled to the rotatable retracting mechanism. The system also includes an end-of-leash detection mechanism configured to determine when the leash is nearing a maximum uncoiled state as the leash is being uncoiled. The system further includes a warning mechanism operatively connected to the end-of-leash detection mechanism and configured to generate a warning signal in response to the end-of-leash detection mechanism determining when the leash is nearing the maximum uncoiled state. The end-of-leash detection mechanism includes a spring component and the warning mechanism includes a rattle component operatively connected to the spring component. The spring component is configured to build up stored energy as the leash uncoils in response to rotation of the rotatable retracting mechanism. The spring component is further configured to release the stored energy when the leash is nearing the maximum uncoiled state. The rattle component is configured to make a rattling sound in response to the stored energy being released. The warning signal may include one or more of a mechanical vibration through the leash, an emitted sonic signal, an emitted infrared signal, or a transmitted radio frequency signal. The emitted sonic signal may be audible to dogs but not to humans.

In accordance with an embodiment, the end-of-leash detection mechanism a pressure sensor. The spring component is configured to apply a determined amount of pressure to the pressure sensor when the leash is nearing the maximum uncoiled state. The pressure sensor is configured to activate the warning mechanism upon sensing the determined amount of pressure. In accordance with an embodiment, the system includes an actuator configured to attach to a dog collar. The actuator is also configured to receive the warning signal and generate an emitted sonic signal in response to receiving the warning signal. The emitted sonic signal may be audible to dogs and not to humans.

In accordance with an embodiment, the end-of-leash detection mechanism includes a switching mechanism and a bulb mechanism attached to the leash. The bulb mechanism on the leash is configured to activate the switching mechanism upon passing by the switching mechanism when the leash is nearing the maximum uncoiled state. The switching mechanism is operatively connected to the warning mechanism. The warning mechanism is configured to generate the warning signal in response to the switching mechanism being activated.

In accordance with an embodiment, the end-of-leash detection mechanism includes a sensing mechanism and a tag attached to the leash. The tag on the leash is configured to be sensed by the sensing mechanism upon passing by the sensing mechanism when the leash is nearing the maximum uncoiled state. The tag may include one of a magnetic tag, an optically encoded tag, or a radio frequency identification tag. The sensing mechanism may include one of a magnetic sensor, an optical sensor, or a radio frequency identification sensor. The sensing mechanism is operatively connected to the warning mechanism, and the warning mechanism is configured to generate the warning signal in response to the sensing mechanism sensing the tag.

One embodiment of the invention comprises a method. The method includes determining when a leash is about to reach a maximum state of detraction from a reel mechanism as the leash is being detracted from the reel mechanism. The method also includes generating a warning signal in response to determining when the leash is about to reach the maximum state of detraction from the reel mechanism. The warning signal provides an indication that the leash is about to reach the maximum state of detraction from the
reel mechanism. The method includes building up stored energy in a spring component as the leash is being detracted from the reel mechanism. The method also includes releasing the stored energy from the spring component when the leash is about to reach the maximum state of detraction from the reel mechanism. The method further includes making a rattling sound with a rattle component in response to the stored energy being released. The warning signal may include one or more of a mechanical vibration through the leash, an emitted first sonic signal, an emitted infrared signal, or a transmitted radio frequency signal. The method may further include transmitting at least a portion of the warning signal to an actuator device attached to a collar worn by a dog. The method may also include the actuator device generating and emitting a second sonic signal, that is audible to dogs and not to humans, in response to the warning signal.

These and other novel features of the subject matter of the present application, as well as details of illustrated embodiments thereof, will be more fully understood from the following description and drawings.

### BRIEF DESCRIPTION OF THE DRAWINGS

Fig. 1 illustrates a problem that can occur when walking a dog;
Fig. 2 illustrates a first example embodiment of a retractable dog leash apparatus;
Fig. 3 illustrates a magnified view of a portion of the retractable dog leash apparatus of Fig. 2;
Fig. 4 illustrates a schematic block diagram of an embodiment of a portion of the retractable dog leash apparatus of Figs. 1-3;
Fig. 5 illustrates an example embodiment of a retractable dog leash system having both a retractable dog leash apparatus and an actuator;
Fig. 6 illustrates a portion of a second example embodiment of a retractable dog leash apparatus;
Fig. 7 illustrates the functional operation of the portion of the retractable dog leash apparatus of Fig. 6 when a leash of the retractable dog leash apparatus is connected to a collar worn by a dog;
Fig. 8 illustrates a portion of a third example embodiment of a retractable dog leash apparatus;
Fig. 9 illustrates a portion of a fourth example embodiment of a retractable dog leash apparatus;
Fig. 10 illustrates the portion of the retractable dog leash apparatus of Fig. 9 showing how a bulb mechanism interacts with a switching mechanism;
Fig. 11 illustrates a schematic block diagram of an embodiment of a portion of the retractable dog leash apparatus of Fig. 9 and Fig. 10;
Fig. 12 illustrates a portion of a fifth example embodiment of a retractable dog leash apparatus;
Fig. 13 illustrates a schematic block diagram of an embodiment of a portion of the retractable dog leash apparatus of Fig. 12;
Fig. 14 illustrates a portion of a sixth example embodiment of a retractable dog leash apparatus;
Fig. 15 illustrates the portion of the retractable dog leash apparatus of Fig. 14 showing how a trigger component interacts with a lever mechanism which interacts with a toothed component;
Fig. 16 illustrates a dog owner happily walking his dog using an embodiment of the invention of the present application; and
Fig. 17 illustrates a portion of a seventh example embodiment of a retractable dog leash apparatus.

### DETAILED DESCRIPTION

The terms "leash", "tether", "cord", and "rope" may be used interchangeably herein. However, in general, the term "cord" is broader than the terms "leash", "tether", or "rope". For example, a leash may be considered a type of cord. The term "housing" is used broadly herein and may refer to a substantially enclosed casing, a substantially open frame structure, or any architecture capable of storing a retractable cord. The phrases "nearing a maximum state of detraction" and "nearing a maximum uncoiled state" may be used interchangeably herein and may refer to a cord that is being pulled out of a housing that is about to run out, such that it cannot be pulled out any further from the housing, but has not yet run out. For example, a cord that is capable of being detracted fifteen feet out of a housing may be defined as nearing a maximum state of detraction when thirteen feet of the cord has been detracted from the housing.

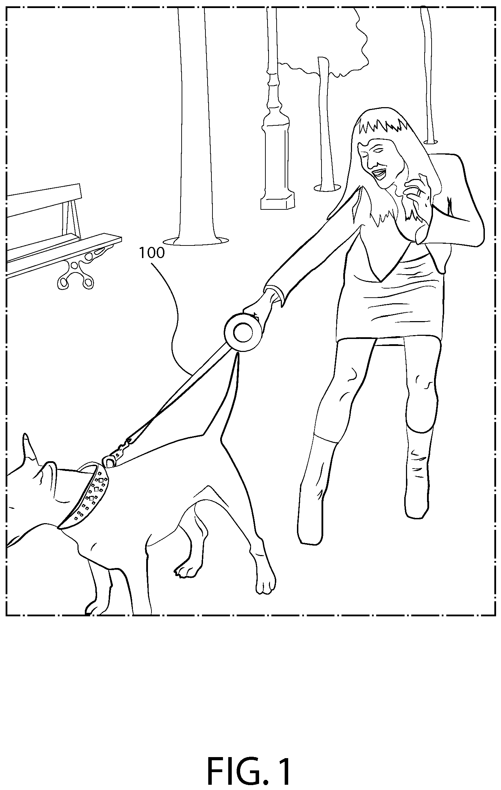

Fig. 1 illustrates a problem that can occur when walking a dog. When walking a dog on a retractable leash 100, often times the dog pulls on the leash such that the leash becomes fully detracted from its housing, jerking the arm of the person walking the dog and jerking and/or choking the neck of the dog (one end of the leash being attached to the housing held by the person and the other end being attached to a collar of the dog). In such situations, neither the person walking the dog nor the dog may be aware that the retractable leash is about to run out. Therefore, it is desirable to provide a warning to the person walking the dog, and/or to the dog, that the leash is about to run out.

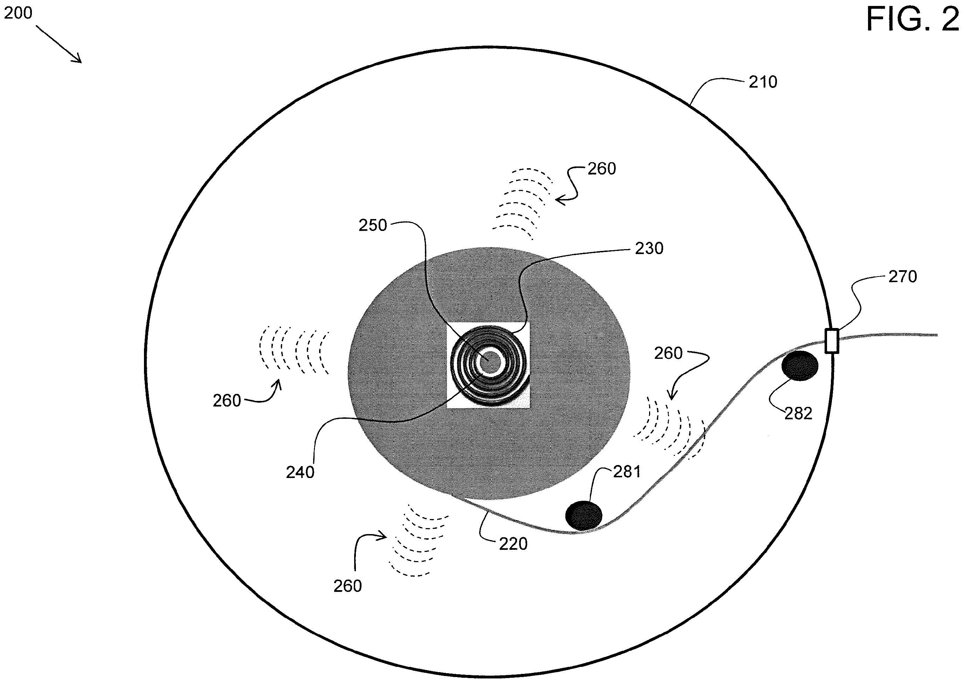

Fig. 2 illustrates a first example embodiment of a retractable dog leash apparatus 200. The apparatus 200 includes a housing 210, a retractable leash 220 that may be coiled to and uncoiled from the housing 210 in a rotating manner, a spring component 230 (e.g., a spiral torsion spring), a pressure sensor 240, and a warning mechanism (e.g., a sound emitter or a radio frequency transmitter) 250 configured to emit an audio or radio frequency signal 260. The spring component 230 and the pressure sensor 240 constitute an end-of-leash detection mechanism as discussed in more detail later herein. The leash 220 may exit from the housing and retract back into the housing via a port 270 along roller guides 281 and 282, for example.

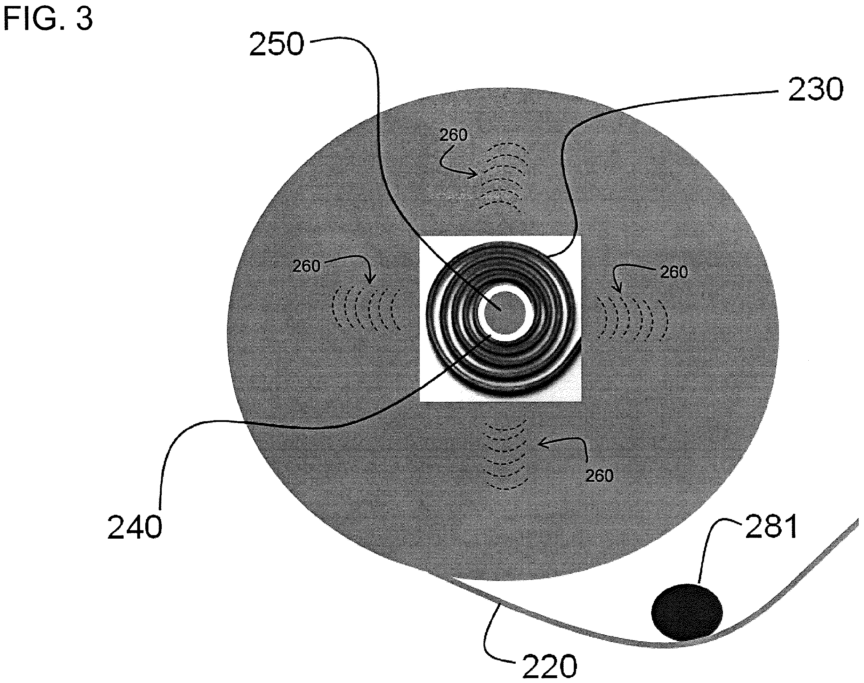

Fig. 3 illustrates a magnified view of a portion of the retractable dog leash apparatus 200 of Fig. 2. In accordance with an embodiment, as the leash 220 is detracted from the housing 210 in a rotating manner, the spring component 230 tightens around the pressure sensor 240 due to the rotation. At a certain point (the end-of-leash warning point), the spring component 230 applies enough pressure to the pressure sensor 240 causing the pressure sensor 240 to output an activating signal to the warning mechanism 250. The activating signal causes the warning mechanism 250 to activate, generating and emitting a sound (or generating and transmitting a radio frequency signal, in accordance with an alternative embodiment).

The apparatus 200 is designed such that the end-of-leash warning point (EOLWP) corresponds to the point where the leash 220 is mostly detracted from the housing 210 and is about to run out. That is, the leash 220 is nearing a maximum state of detraction (e.g., nearing a maximum uncoiled state) from the housing 210. For example, a leash that is capable of being detracted twenty feet out of a housing may be designed as nearing a maximum state of detraction when fifteen feet of the leash has been detracted from the housing.

When the warning mechanism 250 emits the sound, the emitted sound 260 alerts the dog at the other end of the leash that the leash is about to run out. As a result, the dog becomes trained to associate the emitted sound with the leash nearing a maximum state of detraction. When the dog is trained (e.g., after several walks with the owner using the apparatus 200), the dog will learn to stop or back off from pulling on the leash when hearing the emitted sound. In this manner, the leash will not totally run out and the arm of the person walking the dog will not be jerked (and the neck of the dog will not be jerked or choked).

In accordance with an embodiment, the emitted sound 260 may be audible to both the person walking the dog (a human) and the dog itself. In accordance with another embodiment, the emitted sound 260 may be audible to the dog but not the human. The warning mechanism 250 may be designed to emit a sound that is annoying to the dog, thus making it more likely that the dog will be trained more quickly to stop or back off from pulling on the leash.

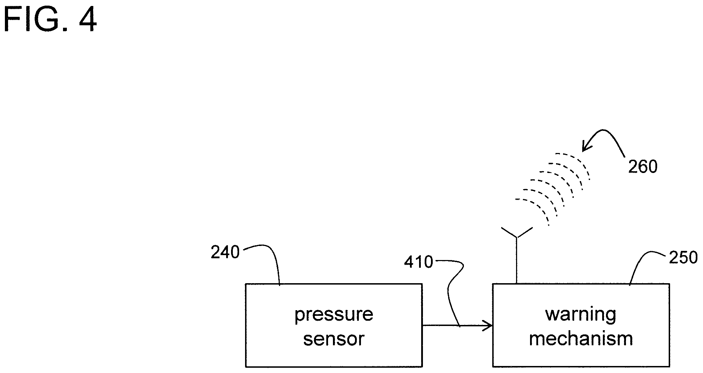

Fig. 4 illustrates a schematic block diagram of an embodiment of a portion of the retractable dog leash apparatus 200 of Figs. 1-3. The pressure sensor 240 is operatively connected to the warning mechanism 250 such that the pressure sensor 240 outputs an activating signal 410 (e.g., an electrical signal) to the warning mechanism 250 when the leash 220 is nearing a defined maximum state of detraction. The pressure sensor 240 acts as a transducer and generates the activating signal 410 when a certain amount of pressure (e.g., a force) is imposed by the spring component 230 on the pressure sensor 240. The pressure sensor 240 may employ any of a number of pressure-sensing or force-sensing technologies including but not limited to piezoresistive, piezoelectric, capacitive, optical, and electromagnetic.

In accordance with an embodiment, the warning mechanism 250 may include a sound emitter. For example, the activating signal 410 may trigger a sonic oscillator to activate within the sound emitter. The sonic oscillator may produce a frequency that is audible to both humans and dogs, or just dogs. The sound emitter may include a power source (e.g., a small battery) to power the oscillator. In accordance with an embodiment, the power source may be kept charged by an energy harvesting device that harvests mechanical energy from the rotating motion of the apparatus, as the leash is uncoiled and recoiled, and converts the mechanical energy to electrical energy which is stored in the power source (e.g., a small battery).

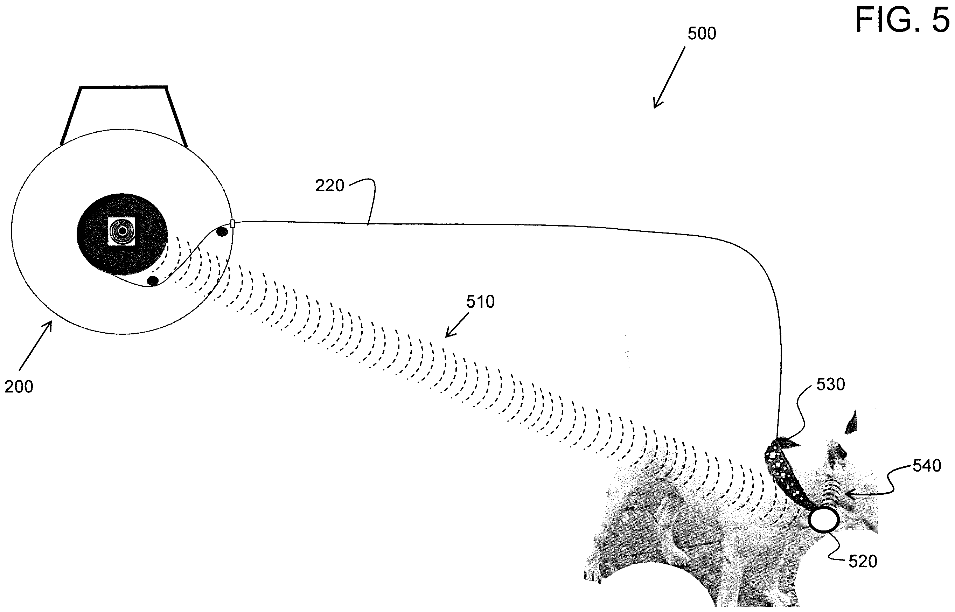

In accordance with another embodiment, the warning mechanism 250 may include a radio frequency transmitter. For example, the activating signal 410 may trigger a radio frequency oscillator to activate within the radio frequency transmitter. The radio frequency oscillator may produce an electromagnetic wave 510 (see Fig. 5) that propagates away from the apparatus 200 at a radio frequency that is capable of being received by an actuator 520 attached to a collar 530 of the dog being walked. The radio frequency transmitter may include a power source (e.g., a small battery) to power the oscillator.

Fig. 5 illustrates an example embodiment of a retractable dog leash system 500 having both the retractable dog leash apparatus 200 and the actuator 520. When the leash 220 is nearing the defined maximum state of detraction (i.e., the EOLWP), the radio frequency signal 510 is transmitted by the warning mechanism 250 and received by the actuator 520. The received radio frequency signal 510 activates the actuator 520, causing the actuator to emit a sonic signal 540 that is audible to the dog, which alerts the dog at the other end of the leash that the leash is about to run out. The actuator 520 may include a power source (e.g., a small battery) to power the actuator.

In accordance with yet another embodiment, the warning mechanism 250 may include an ultrasonic transmitter instead of a radio frequency transmitter. The resulting system would work much the same way as the system 500 of Fig. 5, except that the actuator would be sensitive to an ultrasonic signal that is emitted by the ultrasonic transmitter when the leash 220 is nearing the defined maximum state of detraction.

In accordance with still another embodiment, the warning mechanism 250 may include an infrared emitter instead of a radio frequency or ultrasonic transmitter. The resulting system would work much the same way as the system 500 of Fig. 5, except that the actuator would be sensitive to an infrared signal that is emitted by the infrared emitter when the leash 220 is nearing the defined maximum state of detraction.

In yet another embodiment, the actuator may be configured to apply a stimulus (including e.g., an electrical shock, a prick, and other stimuli) to the dog upon receiving an activating signal. The activating signal may be transmitted wirelessly to the actuator, or via wired means through the leash 220, for example, in accordance with various embodiments.

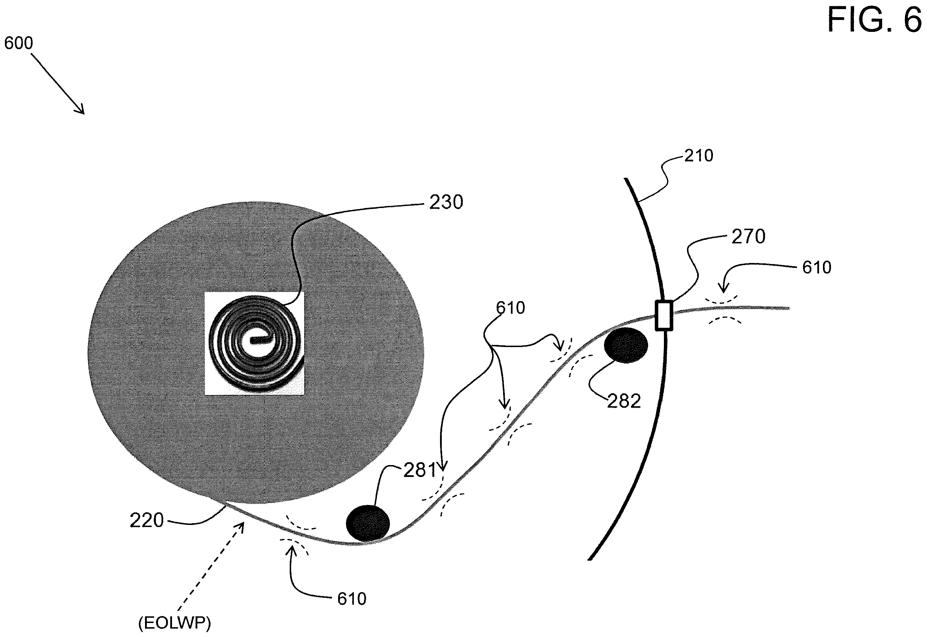

Fig. 6 illustrates a portion of a second example embodiment of a retractable dog leash apparatus 600. The leash apparatus 600 is similar to the leash apparatus 200 of Fig. 2 except that the leash apparatus 600 does not include a pressure sensor or a sonic, radio frequency, or infrared emitter of any kind. In the embodiment of Fig. 6, the spring component 230 (e.g., a spiral torsion spring) builds up stored energy due to rotation as the leash 220 is detracted from the housing 210. Once the EOLWP is reached (i.e., when the leash 220 is nearing the defined maximum state of detraction), the spring component releases the stored energy causing a mechanical vibration 610 to be propagated through the leash 220. The spring mechanism 230 is configured to temporarily decouple from the rotating mechanism of the apparatus 600 to release its energy upon reaching the EOLWP.

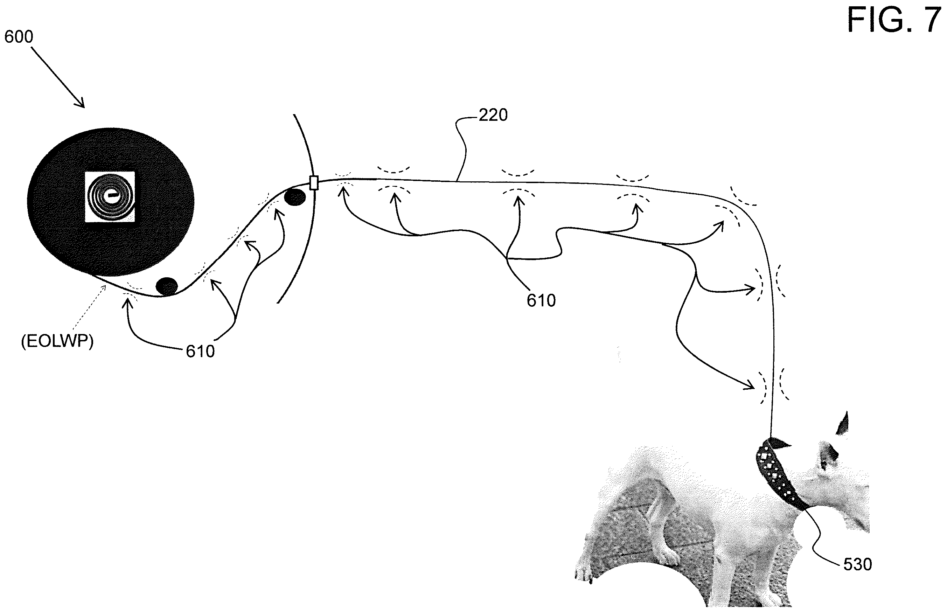

Fig. 7 illustrates the functional operation of the portion of the retractable dog leash apparatus 600 of Fig. 6 when a leash 220 of the retractable dog leash apparatus 600 is connected to a collar 530 worn by a dog. The mechanical vibration 610 propagated through the leash 220 is felt by the dog, providing an indication to the dog that the leash 220 is nearing the defined maximum state of detraction, causing the dog to stop or back off from pulling on the leash. Again, after several walks with the dog using the apparatus 600, the dog will train and react to the mechanical vibration in the leash to avoid being jerked and/or choked by the leash running out. Such an embodiment is purely mechanical and does not require any electrical components or sources of electrical power.

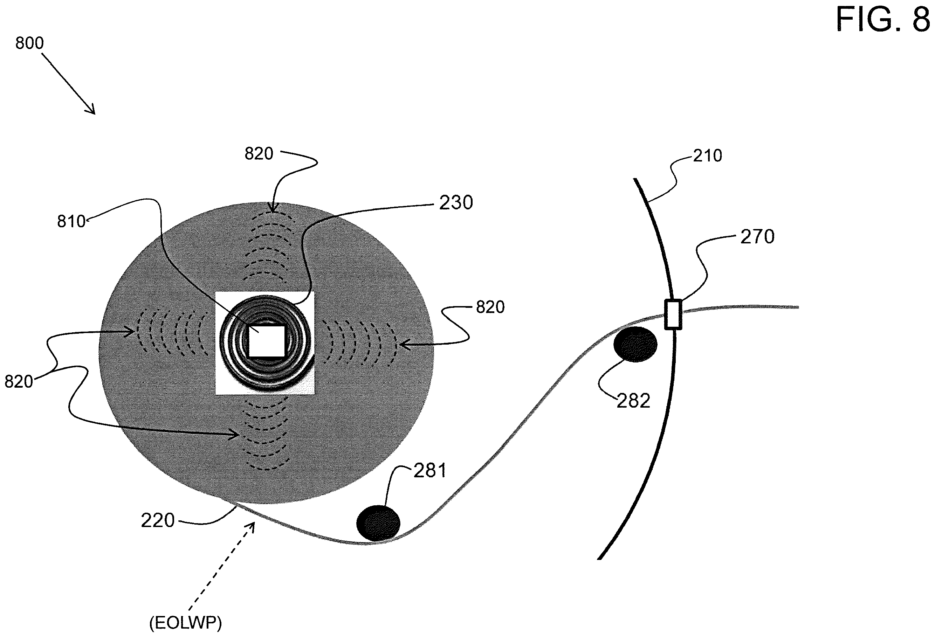

Fig. 8 illustrates a portion of a third example embodiment of a retractable dog leash apparatus 800. The leash apparatus 800 is similar to the leash apparatus 600 of Fig. 6 except that the leash apparatus 800 does not propagate a mechanical vibration through the leash 220. Instead, the leash apparatus 800 includes a rattle component 810 operatively connected to the spring component 230. In the embodiment of Fig. 8, the spring component 230 (e.g., a spiral torsion spring) builds up stored energy due to rotation as the leash 220 is detracted from the housing 210. Once the EOLWP is reached (i.e., when the leash 220 is nearing the defined maximum state of detraction), the spring component 230 releases the stored energy causing the rattle component 810 to make a rattling sound 820 in response to the stored energy being released. The spring mechanism 230 is configured to temporarily decouple from the rotating mechanism of the apparatus 600 to release its energy upon reaching the EOLWP.

The rattling sound 820 is heard by the dog, providing an indication to the dog that the leash 220 is nearing the defined maximum state of detraction, causing the dog to stop or back off from pulling on the leash. Again, after several walks with the dog using the apparatus 800, the dog will train and react to the rattling sound 820 to avoid being jerked and/or choked by the leash running out. Such an embodiment is purely mechanical and does not require any electrical components or sources of electrical power.

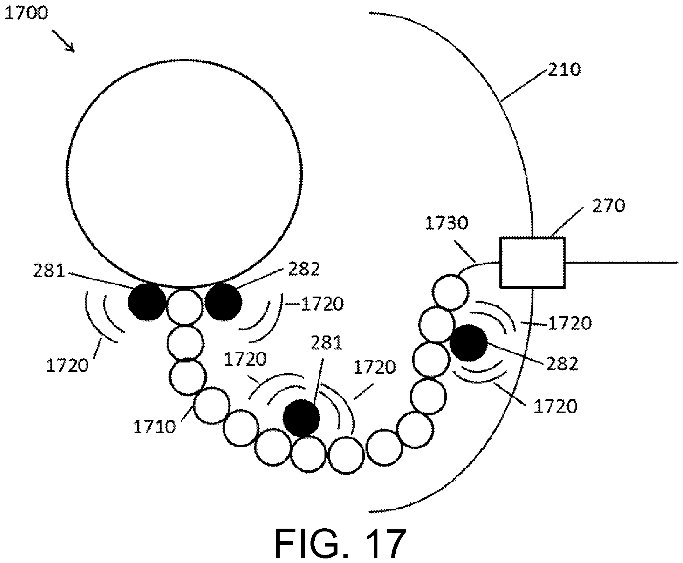

Fig. 17 depicts an alternate embodiment of a retractable dog leash apparatus 1700. The apparatus 1700 includes a leash 1730 with a secondary portion 1710. When the leash 1730 is nearing the defined maximum state of detraction, the secondary portion 1710 of the leash 1730 will come into contact with one or more roller guides 281 and 282 thereby forming a friction component. The secondary portion 1710 may include a beaded length or cable, ball-link or ball-chain, ellipse, diamond, zig-zag, or other types of configurations that will allow the secondary portion 1710 to form a friction component with roller guides 281 and 282. The friction component may produce a frictional sound and/or vibration 1720. Such a frictional sound and/or vibration 1720 may be produced as the leash 1730 nears any state of detraction including, but not limited to, fifty (50%) percent, seventy-five (75%) percent, or ninety (90%) percent. The frictional sound and/or vibration 1720 may be felt and/or heard by a person holding the leash apparatus 1700, the dog, or both. The frictional sound and/or vibration 1720 will not only alert the person that the leash 1730 is nearing the defined maximum state of detraction, but it will also alert the dog, which may cause the dog to stop or back off from pulling the leash 1730. After several walks with the dog using the apparatus 1700, the dog will train and react to the frictional sound and/or vibration 1720 to avoid being jerked and/or choked by the leash 1730 running out. While four roller guides 281 and 282 are shown in Fig. 17, it is to be understood that any number of roller guides in any number of arrangements may be included within the leash apparatus 1700, including, but not limited to, inside or adjacent to the port 270.

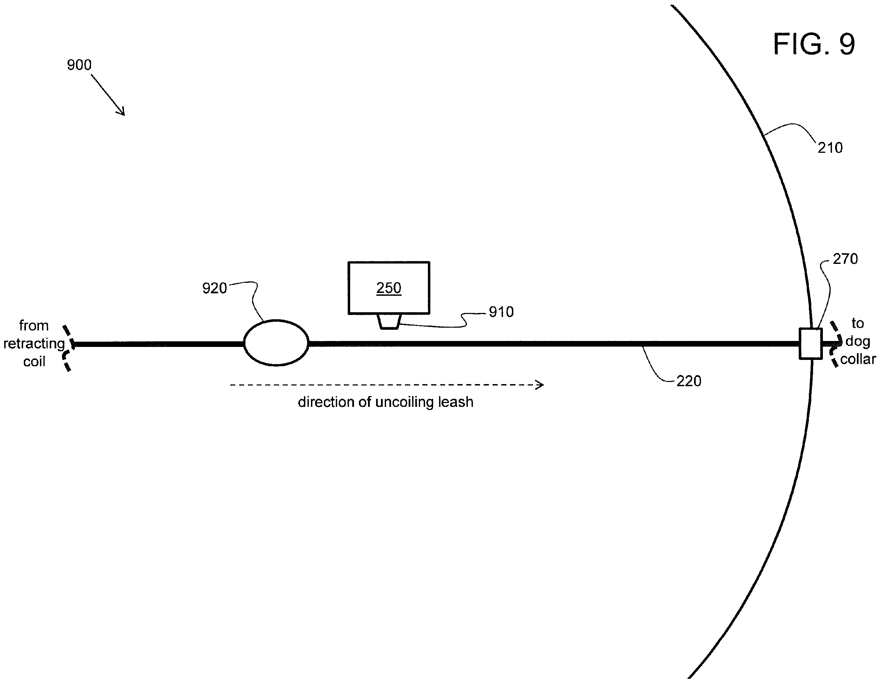

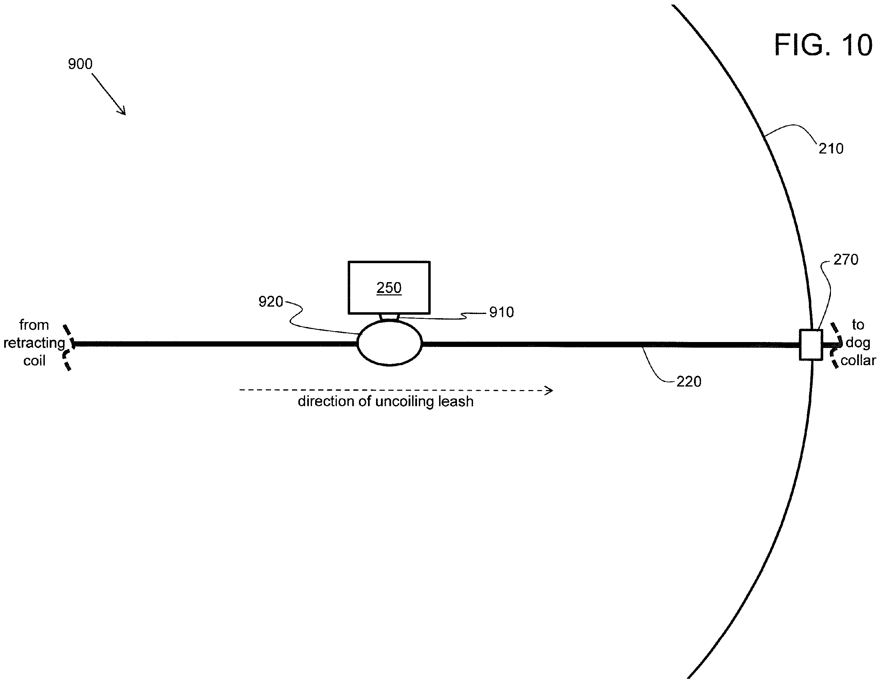

Fig. 9 illustrates a portion of a fourth example embodiment of a retractable dog leash apparatus 900. The apparatus 900 includes a switching mechanism 910 operatively connected to a warning mechanism 250. Again the warning mechanism 250 may emit a sonic signal, an ultrasonic signal, a radio frequency signal, or an infrared signal, for example, as previously described herein, in response to an activation signal from the switching mechanism 910. The switching mechanism 910 may be a pressure sensitive switching mechanism, a toggle switching mechanism, or some other kind of switching mechanism, in accordance with various embodiments. The apparatus 900 also includes a bulb mechanism 920 operatively attached to the leash 220. The bulb mechanism 920 may be a plastic knob or clasp, for example. The attachment of the bulb mechanism 920 to the leash 220 defines a EOLWP. When the leash 220 is being uncoiled (see direction of uncoiling leash in Fig. 9) due to, for example, a dog pulling on the far end of the leash, the bulb mechanism 920 on the leash 220 will eventually reach the switching mechanism 910 as shown in Fig. 10.

Fig. 10 illustrates the portion of the retractable dog leash apparatus 900 of Fig. 9 showing how the bulb mechanism 920 interacts with the switching mechanism 910. The bulb mechanism 920 and the switching mechanism 910 are configured such that the bulb mechanism 920 triggers the switching mechanism 910 when passing by the switching mechanism 910. When the bulb mechanism 920 reaches the switching mechanism 910 and triggers the switching mechanism 910, the switching mechanism 910 sends an activation signal to the warning mechanism 250. The warning mechanism 250 may act in accordance with previous descriptions of the warning mechanism 250 herein, providing an indication to the dog and/or the human that the leash is about to run out.

In accordance with an embodiment, when the leash 220 is retracted such that the bulb mechanism 920 passes by the switching mechanism 910 again, but in the opposite direction, the switching mechanism 910 is reset (e.g., toggled back to its original position) and the warning mechanism 250 is deactivated. In other embodiments, the warning mechanism 250 may be active for a defined period of time, after which the warning mechanism 250 automatically turns off, and the switching mechanism 910 may automatically reset.

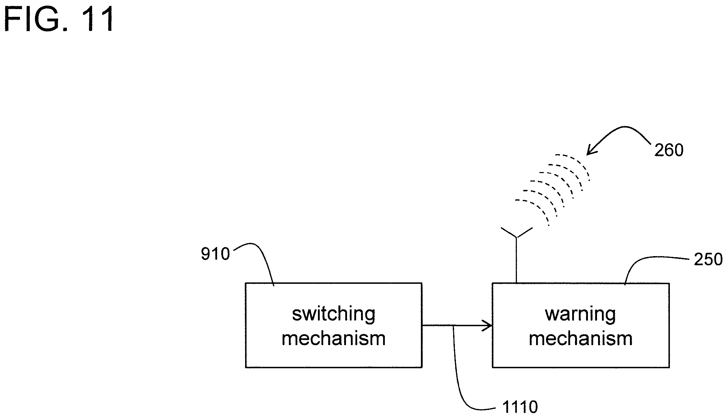

Fig. 11 illustrates a schematic block diagram of an embodiment of a portion of the retractable dog leash apparatus 900 of Fig. 9 and Fig. 10. The switching mechanism 910 is operatively connected to the warning mechanism 250 such that the switching mechanism 910 outputs an activating signal 1110 (e.g., an electrical signal) to the warning mechanism 250 when the leash 220 is nearing a defined maximum state of detraction (i.e., when the bulb mechanism 920 passes by). The warning mechanism 250 may output, for example, a sonic signal, a radio frequency signal, or an infrared signal, as previously described herein. The sonic signal may be audible to only humans, only dogs, or to both humans and dogs. Alternatively the sonic signal may be an ultrasonic signal used to activate an actuator 520 on a collar 530 of a dog, as previously described herein. Similarly, the radio frequency signal or the infrared signal may be used to activate an actuator 520 on a collar 530 of a dog, as previously described herein.

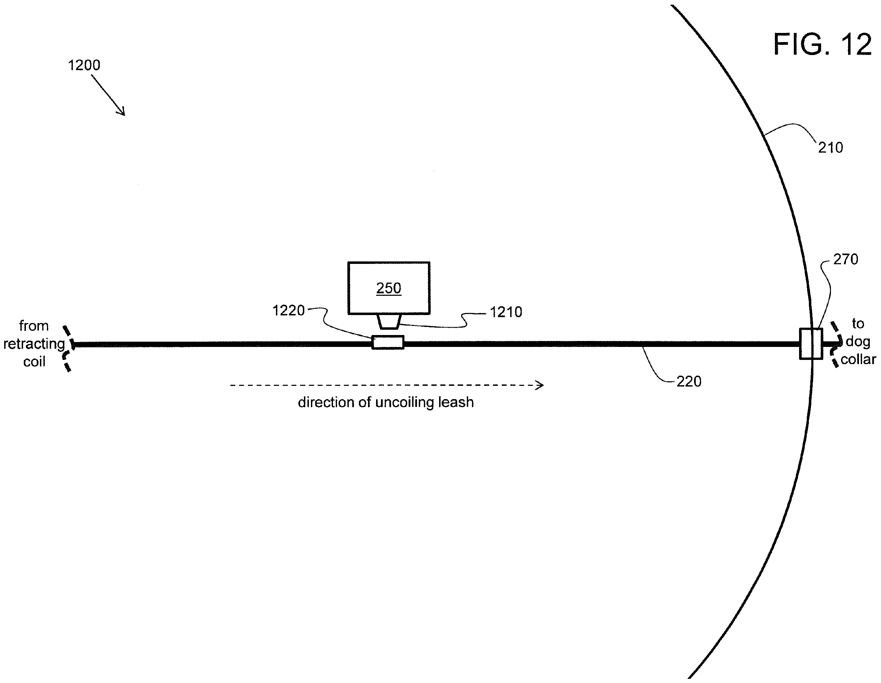

Fig. 12 illustrates a portion of a fifth example embodiment of a retractable dog leash apparatus 1200. The apparatus 1200 includes a sensing mechanism 1210 operatively connected to a warning mechanism 250. Again the warning mechanism 250 may emit a sonic signal, an ultrasonic signal, a radio frequency signal, or an infrared signal, for example, as previously described herein, in response to an activation signal from the sensing mechanism 1210. The sensing mechanism 1210 may be a magnetic sensor, an optical sensor, a radio frequency identification (RFID) sensor, or some other kind of sensing mechanism, in accordance with various embodiments. Further, the sensing mechanism may be unrelated to pressure. For example, an optical sensor may measure the length of leash 220 that has exited the housing 210. Further, the length of leash 220 may be measured using markings, symbols, colors or various textures such as cross-hatching on the leash 220 to signify different portions of the leash 220. Additionally, an optical sensor may measure the length of the leash 220 that has exited the housing 210 through magnetic or electrically conductive materials either on or in the leash 220 in order to indicate the position of the leash 220 with respect to the housing 210. The apparatus 1200 also includes a tag 1220 operatively attached to the leash 220. The tag 1220 may be a magnetic tag, an optically encoded tag, an RFID tag, or some other type of tag, in accordance with various embodiments, where the tag 1220 is compatible with the sensing mechanism 1210. The attachment of the tag 1220 to the leash 220 defines a EOLWP. The tag 1220 may be attached to the leash in any of a number of ways including, but not limited to, glueing, sewing, riveting, etc. Alternatively, in some embodiments, the tag may be embedded in the leash or be an integral part of the leash.

When the leash 220 is being uncoiled (see direction of uncoiling leash in Fig. 12) due to, for example, a dog pulling on the far end of the leash, the tag 1220 on the leash 220 will eventually reach the sensing mechanism 1210 as shown in Fig. 12. Fig. 12 shows how the tag 1220 interacts with the sensing mechanism 1210. The tag 1220 and the sensing mechanism 1210 are configured such that the sensing mechanism 1210 senses the tag 1220 when the tag 1220 passes by the sensing mechanism 1210. When the tag 1220 reaches the sensing mechanism 1210 and the tag 1220 is sensed, the sensing mechanism 1210 sends an activation signal to the warning mechanism 250. The warning mechanism 250 may act in accordance with previous descriptions of the warning mechanism 250 herein, providing an indication to the dog and/or the human that the leash is about to run out.

In accordance with an embodiment, when the leash 220 is retracted such that the tag 1220 passes by the sensing mechanism 1210 again, but in the opposite direction, the sensing mechanism 1210 senses the tag 1220 again and deactivates the warning mechanism 250. In other embodiments, the warning mechanism 250 may be active for a defined period of time, after which the warning mechanism 250 automatically turns off.

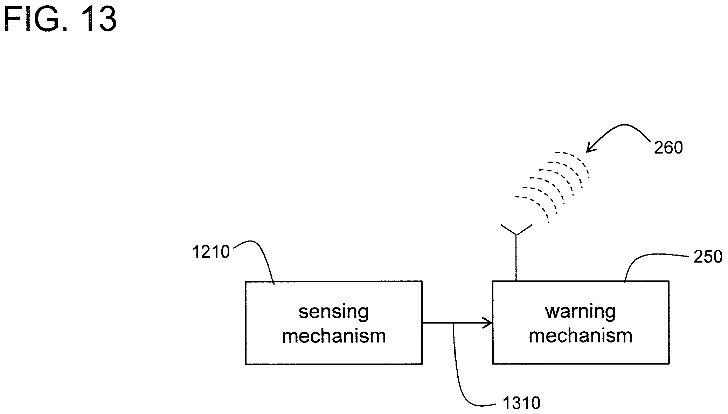

Fig. 13 illustrates a schematic block diagram of an embodiment of a portion of the retractable dog leash apparatus 1200 of Fig. 12. The sensing mechanism 1210 is operatively connected to the warning mechanism 250 such that the sensing mechanism 1210 outputs an activating signal 1310 (e.g., an electrical signal) to the warning mechanism 250 when the leash 220 is nearing a defined maximum state of detraction (i.e., when the tag 1220 passes by). The warning mechanism 250 may output, for example, a sonic signal, a radio frequency signal, or an infrared signal, as previously described herein. The sonic signal may be audible to only humans, only dogs, or to both humans and dogs. Alternatively the sonic signal may be an ultrasonic signal used to activate an actuator 520 on a collar 530 of a dog, as previously described herein. Similarly, the radio frequency signal or the infrared signal may be used to activate an actuator 520 on a collar 530 of a dog, as previously described herein.

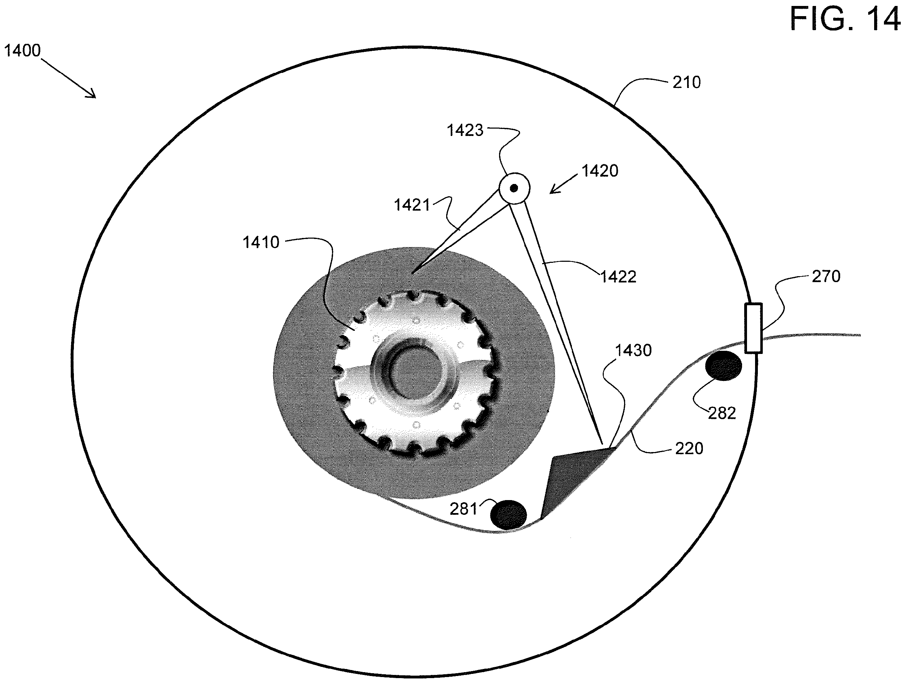

Fig. 14 illustrates a portion of a sixth example embodiment of a retractable dog leash apparatus 1400. The retractable dog leash apparatus 1400 is similar to the retractable dog leash apparatus 600 of Fig. 6 except that, instead of having a spring component 230, the apparatus 1400 includes a toothed component 1410, a lever mechanism 1420, and a trigger component 1430. The toothed component 1410 is configured to rotate as the leash 220 is detracted from the housing 210. The trigger component 1430 is attached to the leash 220 defining an EOLWP. The lever mechanism 1420 has a first arm 1421 and a second arm 1422 attached to a pivot point 1423. The trigger component 1430 may be a simple plastic triangular piece attached to the leash 220.

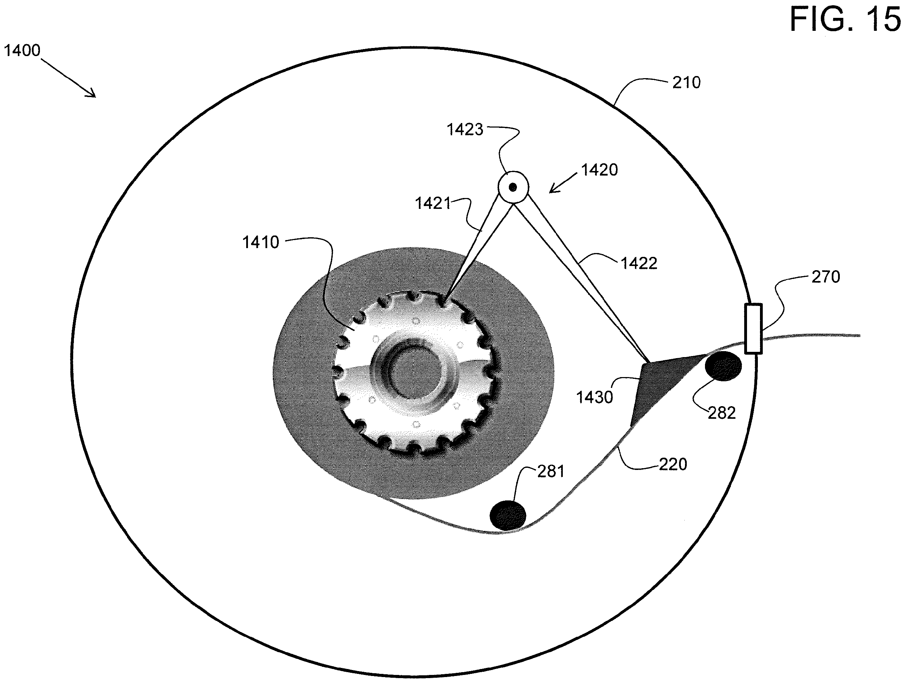

During operation, when the leash 220 is initially being detracted from the housing 210, the lever mechanism 1420 is disengaged from the toothed component 1410. However, as the EOLWP point is reached, the trigger component 1430 engages the second arm 1422 of the lever mechanism 1420, causing the lever mechanism 1420 to rotate around the pivot point 1423 such that the first arm 1421 engages the toothed component 1410. Fig. 15 illustrates the portion of the retractable dog leash apparatus 1400 of Fig. 14 showing how the trigger component 1430 interacts with the second arm 1422 of the lever mechanism 1420 as it passes by during detraction, and how the first arm 1421 of the lever mechanism 1420 engages the rotating toothed component 1410.

In one embodiment, when the first arm 1421 engages the rotating toothed component 1410, the engagement causes the toothed component 1410 to vibrate, causing a mechanical vibration to be propagated through the leash 220 in a similar manner to that of Fig. 6 and Fig. 7. The mechanical vibration propagated through the leash 220 is felt by the dog, providing an indication to the dog that the leash 220 is nearing the defined maximum state of detraction, causing the dog to stop or back off from pulling on the leash.

In another embodiment, when the first arm 1421 engages the rotating toothed component 1410, the engagement causes a clicking sound that can be heard by the dog. The clicking sound provides an indication to the dog that the leash 220 is nearing the defined maximum state of detraction, causing the dog to stop or back off from pulling on the leash.

Further embodiments of the invention of the present application may include audible speakers which may be located either in the collar, in the leash, in the housing 210, or at an external location of any of the components previously described in the specification. Further, an alarm may be included, which would allow a user to pick an audible sound from a variety of options. For example, a user may choose to pick a sound that the dog may acknowledge or other sounds with which the dog is familiar, including, but not limited to, the sound of an electric and/or invisible fence, or any other recognizable sound.

Still further embodiments of the invention of the present application may include wired embodiments allowing communication with any electronics that may be located either internally or externally on the dog's collar. In such embodiments, a wire is attached either inside or outside of the leash 220, which communicates either directly with an electronic located either internally or externally on the dog's collar.

The various embodiments described herein are examples of possible embodiments but are not meant to be limiting. Other embodiments falling within the scope of the appended claims are possible as well. For example, various other combinations of parts of the various embodiments described herein may be possible and fall within the scope of the appended claims. For example, in other embodiments, the configuration of the lever mechanism 1420 and the trigger component 1430 may be used to activate switches and/or electronics.

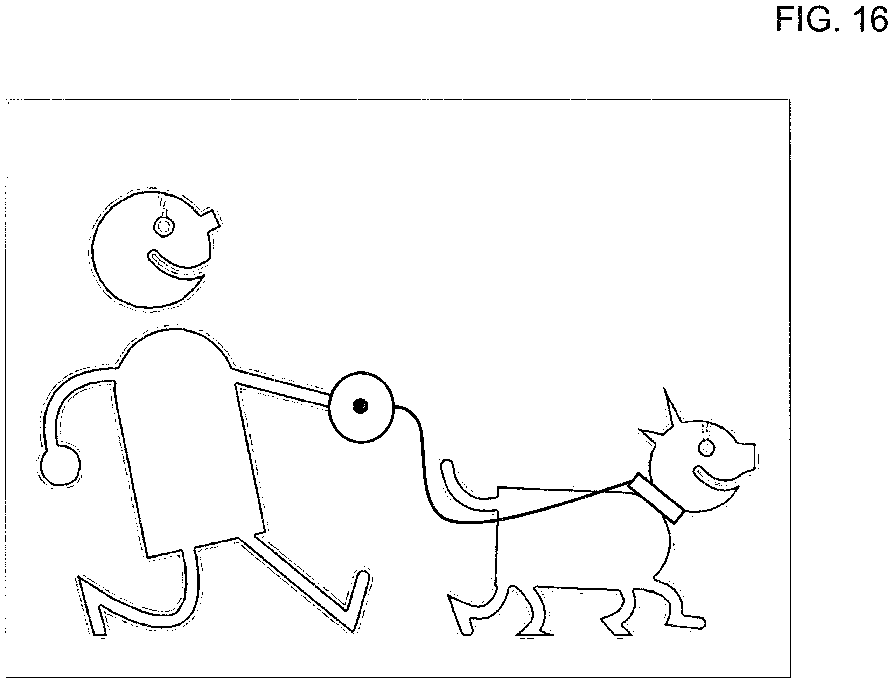

Fig. 16 illustrates a dog owner happily walking his dog using an embodiment of the invention of the present application. The dog is trained to respond to the warning signal by stopping or backing off from pulling on the leash so as not to jerk the arm of the dog owner or jerk and/or choke the neck of the dog.

In summary, an apparatus, a system, and a method for providing an end-of-leash warning are disclosed. Embodiments provide for determining when a retractable leash is about to reach a maximum state of detraction from a housing or reel mechanism as the leash is being detracted (e.g., by a dog), and generating a warning signal in response to determining when the retractable leash is about to reach the maximum state of detraction. The warning signal may be in the form of, for example, an emitted sonic signal, an emitted infrared signal, a transmitted radio frequency signal, or a mechanical vibration through the leash. The warning signal may be used to alert, for example, a dog and/or a person walking a dog that the leash is running out.

In the specification and claims, reference will be made to a number of terms that have the following meanings. The singular forms "a", "an" and "the" include plural referents unless the context clearly dictates otherwise. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term. Moreover, unless specifically stated otherwise, any use of the terms "first," "second," etc., do not denote any order or importance, but rather the terms "first," "second," etc., are used to distinguish one element from another.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be."

This written description uses examples to disclose the invention, including the best mode, and also to enable one of ordinary skill in the art to practice the invention, including making and using any devices or systems and performing any incorporated methods. The patentable scope of the invention is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal language of the claims.

While the claimed subject matter of the present application has been described with reference to certain embodiments, it will be understood by those skilled in the art that various changes may be made and equivalents may be substituted without departing from the scope of the claimed subject matter. In addition, many modifications may be made to adapt a particular situation or material to the teachings of the claimed subject matter without departing from its scope. Therefore, it is intended that the claimed subject matter not be limited to the particular embodiments disclosed, but that the claimed subject matter will include all embodiments falling within the scope of the appended claims.

## Claims

1. A system (200) comprising:
a rotatable retracting mechanism;
a leash (220) coiled around the rotatable retracting mechanism and configured to be uncoiled from and recoiled to the rotatable retracting mechanism;
an end-of-leash detection mechanism (230 and 240) configured to determine when the leash (220) is nearing a maximum uncoiled state as the leash (220) is being uncoiled; and
a warning mechanism (250) operatively connected to the end-of-leash detection mechanism and configured to generate a warning signal in response to the end-of-leash detection mechanism determining when the leash (220) is nearing the maximum uncoiled state,
wherein the end-of-leash detection mechanism (230 and 240) includes a spring component (230) and the warning mechanism (250) includes a rattle component (810) operatively connected to the spring component (230),
**characterized in that** the spring component (230) is configured to build up stored energy as the leash (220) uncoils in response to rotation of the rotatable retracting mechanism, and **in that** the spring component (230) is further configured to release the stored energy when the leash (220) is nearing the maximum uncoiled state, and **in that** the rattle component (810) is configured to make a rattling sound in response to the stored energy being released.

2. The system of claim 1, wherein the warning signal further includes one or more of a mechanical vibration (610) through the leash (220), an emitted sonic signal (540), an emitted infrared signal, and/or a transmitted radio frequency signal (260).

3. The system of claim 1, wherein the end-of-leash detection mechanism includes a pressure sensor (240), wherein the spring component (230) is configured to apply a determined amount of pressure to the pressure sensor (240) when the leash (220) is nearing the maximum uncoiled state, and wherein the pressure sensor (240) is configured to activate the warning mechanism (250) upon sensing the determined amount of pressure.

4. The system of claim 1, further comprising an actuator (520) configured to attach to a dog collar (530), wherein the actuator (520) is configured to receive the warning signal and generate an emitted sonic signal (540) in response to receiving the warning signal.

5. The system of claim 1, wherein the end-of-leash detection mechanism (230 and 240) includes:
a switching mechanism (910); and
a bulb mechanism (920) attached to the leash (220), wherein the bulb mechanism (920) on the leash (220) is configured to activate the switching mechanism (910) upon passing by the switching mechanism (910) when the leash (220) is nearing the maximum uncoiled state.

6. The system of claim 5, wherein the switching mechanism (910) is operatively connected to the warning mechanism (250), and wherein the warning mechanism (250) is configured to generate the warning signal in response to the switching mechanism (910) being activated.

7. The system of claim 1, wherein the end-of-leash detection mechanism includes:
a sensing mechanism (1210); and
a tag attached to the leash (220), wherein the tag on the leash (220) is configured to be sensed by the sensing mechanism (1210) upon passing by the sensing mechanism (1210) when the leash (220) is nearing the maximum uncoiled state.

8. The system of claim 7, wherein the sensing mechanism (1210) includes one of a magnetic sensor, an optical sensor, or a radio frequency identification sensor.

9. The system of claim 7, wherein the sensing mechanism (1210) is operatively connected to the warning mechanism (250), and wherein the warning mechanism (250) is configured to generate the warning signal in response to the sensing mechanism (1210) sensing the tag (1220).

10. A method comprising:
determining when a leash (220) is about to reach a maximum state of detraction from a reel mechanism as the leash (220) is being detracted from the reel mechanism; and
generating a warning signal in response to determining when the leash is about to reach the maximum state of detraction from the reel mechanism, wherein the warning signal provides an indication that the leash (220) is about to reach the maximum state of detraction from the reel mechanism,
**characterized by** building up stored energy in a spring component (230) as the leash (220) is being detracted from the reel mechanism, and by releasing the stored energy from the spring component (230) when the leash (220) is about to reach the maximum state of detraction from the reel mechanism, and by making a rattling sound with a rattle component (810) in response to the stored energy being released.

## Patentansprüche

1. System (200), umfassend:
einen drehbaren Einziehmechanismus;
eine Leine (220), die um den drehbaren Einziehmechanismus gewickelt ist und die konfiguriert ist, um von dem drehbaren Einziehmechanismus abgewickelt und auf diesen aufgewickelt zu werden;
einen Leinenende-Detektionsmechanismus (230 und 240), der konfiguriert ist, um zu bestimmen, dass die Leine (220) sich einem maximal abgewickeltem Zustand nähert, während die Leine (220) abgewickelt wird; und
einen Warnmechanismus (250), der mit dem Leinenende-Detektionsmechanismus wirkverbunden ist und der konfiguriert ist, um ein Warnsignal als Antwort darauf zu generieren, dass der Leinenende-Detektionsmechanismus bestimmt, dass die Leine (220) sich dem maximal abgewickelten Zustand nähert,
wobei der Leinenende-Detektionsmechanismus (230 und 240) eine Federkomponente (230) beinhaltet und der Warnmechanismus (250) eine Rasselkomponente (810) beinhaltet, die mit der Federkomponente (230) wirkverbunden ist,
**dadurch gekennzeichnet, dass** die Federkomponente (230) konfiguriert ist, um, während sich die Leine (220) abwickelt, gespeicherte Energie als Antwort auf eine Drehung des drehbaren Einziehmechanismus aufzubauen, und dadurch, dass die Federkomponente (230) des Weiteren konfiguriert ist, um die gespeicherte Energie freizusetzen, wenn die Leine (220) sich dem maximal abgewickelten Zustand nähert, und dadurch, dass die Rasselkomponente (810) konfiguriert ist, um ein Rasselgeräusch als Antwort auf das Freisetzen der gespeicherten Energie zu erzeugen.

2. System nach Anspruch 1, wobei das Warnsignal des Weiteren eines oder mehrere von einer mechanischen Vibration (610) durch die Leine (220), einem emittierten Schallsignal (540), einem emittierten Infrarotsignal, und/oder einem übermittelten Funkwellensignal (260) beinhaltet.

3. System nach Anspruch 1, wobei der Leinenende-Detektionsmechanismus einen Drucksensor (240) beinhaltet, wobei die Federkomponente (230) konfiguriert ist, um einen bestimmten Druck auf den Drucksensor (240) aufzubringen, wenn die Leine (220) sich dem maximal abgewickelten Zustand nähert, und wobei der Drucksensor (240) konfiguriert ist, um den Warnmechanismus (250) auf ein Wahrnehmen des bestimmten Drucks hin, zu aktivieren.

4. System nach Anspruch 1, des Weiteren umfassend einen Aktuator (520), der konfiguriert ist, um an einem Hundehalsband (530) befestigt zu werden, wobei der Aktuator (520) konfiguriert ist, um das Warnsignal zu empfangen und ein emittiertes Schallsignal (540) als Antwort auf ein Empfangen des Warnsignals zu generieren.

5. System nach Anspruch 1, wobei der Leinenende-Detektionsmechanismus (230 und 240) beinhaltet:
einen Schaltmechanismus (910); und
einen Wulstmechanismus (920), der an der Leine (220) befestigt ist, wobei der Wulstmechanismus (920) an der Leine (220) konfiguriert ist, um den Schaltmechanismus (910) beim Passieren des Schaltmechanismus (910) zu aktivieren, wenn die Leine (220) sich dem maximal abgewickeltem Zustand nähert.

6. System nach Anspruch 5, wobei der Schaltmechanismus (910) mit dem Warnmechanismus (250) wirkverbunden ist, und wobei der Warnmechanismus (250) konfiguriert ist, um das Warnsignal als Antwort auf die Aktivierung des Schaltmechanismus (910) zu erzeugen.

7. System nach Anspruch 1, wobei der Leinenende-Detektionsmechanismus beinhaltet:
einen Sensormechanismus (1210); und
eine Markierung, die an der Leine (220) befestigt ist, wobei die Markierung an der Leine (220) konfiguriert ist, um von dem Sensormechanismus (1210) beim Passieren (1210) des Sensormechanismus (1210) wahrgenommen zu werden, wenn die Leine (220) sich dem maximal abgewickelten Zustand nähert.

8. System nach Anspruch 7, wobei der Sensormechanismus (1210) entweder einen magnetischen Sensor oder einen optischen Sensor oder einen Funkwellenidentifikationssensor beinhaltet.

9. System nach Anspruch 7, wobei der Sensormechanismus (1210) mit dem Warnmechanismus (250) wirkverbunden ist, und wobei der Warnmechanismus (250) konfiguriert ist, um das Warnsignal als Antwort darauf, dass der Sensormechanismus (1210) die Markierung (1220) wahrnimmt, zu generieren.

10. Verfahren, umfassend:
Bestimmen, wenn eine Leine (220) dabei ist, einen maximal abgezogenen Zustand von einem Aufrollmechanismus zu erreichen, während die Leine (220) von dem Aufrollmechanismus abgezogen wird; und
Generieren eines Warnsignals als Antwort auf das Bestimmen, dass die Leine dabei ist, den maximal abgezogenen Zustand von dem Aufrollmechanismus zu erreichen, wobei das Warnsignal einen Hinweis bereitstellt, dass die Leine (220) dabei ist, den maximal abgezogenen Zustand von dem Aufrollmechanismus zu erreichen,
**gekennzeichnet durch** ein Aufbauen von gespeicherter Energie in einer Federkomponente (230), während die Leine (220) von dem Aufrollmechanismus abgezogen wird, und durch ein Freisetzen der gespeicherten Energie von der Federkomponente (230), wenn die Leine (220) dabei ist, den maximal abgezogenen Zustand von dem Aufrollmechanismus zu erreichen, und durch ein Erzeugen eines Rasselgeräuschs mit einer Rasselkomponente (810) als Antwort auf das Freisetzen der gespeicherten Energie.

## Revendications

1. Système (200) comprenant :
un mécanisme de rappel rotatif ;
une laisse (220) enroulée autour du mécanisme de rappel rotatif et configurée pour être déroulée du mécanisme de rappel rotatif et de nouveau enroulée vers le mécanisme de rappel rotatif ;
un mécanisme de détection de fin de laisse (230 et 240), configuré pour déterminer le moment où la laisse (220) s'approche d'un état déroulé au maximum au cours du déroulement de la laisse (220) ; et
un mécanisme d'alerte (250) relié fonctionnellement au mécanisme de détection de fin de laisse et configuré pour générer un signal d'alerte en réponse à la détermination, par le mécanisme de détection de fin de laisse, que la laisse (220) s'approche de l'état déroulé au maximum,
le mécanisme de détection de fin de laisse (230 et 240) comprenant un composant ressort (230) et le mécanisme d'alerte (250) comprenant un composant à cliquetis (810) relié fonctionnellement au composant ressort (230),
**caractérisé en ce que** le composant ressort (230) est configuré pour accumuler de l'énergie stockée à mesure que la laisse (220) se déroule en réaction à la rotation du mécanisme de rappel rotatif, et **en ce que** le composant ressort (230) est en outre configuré pour libérer l'énergie stockée lorsque la laisse (220) s'approche de l'état déroulé au maximum, et **en ce que** le composant à cliquetis (810) est configuré pour produire un son de cliquetis en réponse à la libération de l'énergie stockée.

2. Système selon la revendication 1, le signal d'alerte comprenant en outre une ou plusieurs des composantes suivantes : une vibration mécanique (610) à travers la laisse (220), un signal sonore émis (540), un signal infrarouge émis et/ou un signal à radiofréquence émis (260).

3. Système selon la revendication 1, le mécanisme de détection de fin de laisse comprenant un capteur de pression (240), le composant ressort (230) étant configuré pour appliquer une valeur de pression déterminée au capteur de pression (240) lorsque la laisse (220) s'approche de l'état déroulé au maximum, et le capteur de pression (240) étant configuré pour activer le mécanisme d'alerte (250) lors de la détection de la valeur de pression déterminée.

4. Système selon la revendication 1, comprenant en outre un actionneur (520) configuré pour être attaché à un collier pour chien (530), l'actionneur (520) étant configuré pour recevoir le signal d'alerte et générer un signal sonore émis (540) en réaction à la réception du signal d'alerte.

5. Système selon la revendication 1, le mécanisme de détection de fin de laisse (230 et 240) comprenant :
un mécanisme de commutation (910) ; et
un mécanisme à bourrelet (920) fixé à la laisse (220), le mécanisme à bourrelet (920) sur la laisse (220) étant configuré pour actionner le mécanisme de commutation (910) lors du passage au niveau du mécanisme de commutation (910) lorsque la laisse (220) s'approche de l'état déroulé au maximum.

6. Système selon la revendication 5, le mécanisme de commutation (910) étant relié fonctionnellement au mécanisme d'alerte (250), et le mécanisme d'alerte (250) étant configuré pour générer le signal d'alerte en réponse à l'actionnement du mécanisme de commutation (910).

7. Système selon la revendication 1, le mécanisme de détection de fin de laisse comprenant :
un mécanisme de détection (1210) ; et
une étiquette fixée à la laisse (220), l'étiquette sur la laisse (220) étant configurée pour être détectée par le mécanisme de détection (1210) lors du passage au niveau du mécanisme de détection (1210) lorsque la laisse (220) s'approche de l'état déroulé au maximum.

8. Système selon la revendication 7, le mécanisme de détection (1210) comprenant l'un des éléments suivants : un capteur magnétique, un capteur optique ou un capteur d'identification par radiofréquence.

9. Système selon la revendication 7, le mécanisme de détection (1210) étant relié fonctionnellement au mécanisme d'alerte (250), et le mécanisme d'alerte (250) étant configuré pour générer le signal d'alerte en réponse à l'actionnement du mécanisme de détection (1210) qui détecte l'étiquette (1220).

10. Procédé comprenant :
détermination du moment auquel une laisse (220) est sur le point d'atteindre un état maximum d'étirage à partir d'un mécanisme à rouleau à mesure que la laisse (220) est étirée à partir du mécanisme à rouleau ; et
génération d'un signal d'alerte en réaction à la détermination du moment auquel la laisse est sur le point d'atteindre l'état maximum d'étirage à partir du mécanisme à rouleau, le signal d'alerte fournissant une indication selon laquelle la laisse (220) est sur le point d'atteindre l'état maximum d'étirage à partir du mécanisme à rouleau,
**caractérisé par** l'accumulation de l'énergie stockée dans un composant ressort (230) à mesure que la laisse (220) est étirée à partir du mécanisme à rouleau, et par la libération de l'énergie stockée du composant ressort (230) lorsque la laisse (220) est sur le point d'atteindre l'état maximum d'étirage à partir du mécanisme à rouleau, et par la production d'un bruit de cliquetis avec un composant à cliquetis (810) en réaction à la libération de l'énergie stockée.
